# NEUE EUROPÄISCHE PATENTSCHRIFT

(11) **EP 1 238 881 B2**
(45) Veröffentlichungstag und Bekanntmachung des Hinweises auf die Entscheidung über den Einspruch: **05.05.2010**
(45) Hinweis auf die Patenterteilung: 02.11.2006
(21) Anmeldenummer: 02004172.9
(22) Anmeldetag: 26.02.2002
(51) Int. Cl.: B61C 7/04, B60L 11/12

(54) **Angetriebenes Schienenfahrzeug, insbesondere für die Personenbeförderung im Nah und Regionalverkehr**
Self-propelled railway vehicle, in particular for passenger transport in urban and regional traffic
Véhicule sur rails à propulsion autonome, en particulier pour le transport de passagers dans le trafic urbain et régional

(30) Priorität: 05.03.2001 DE 10110424
(43) Veröffentlichungstag der Anmeldung: 11.09.2002
(73) Patentinhaber: SIEMENS AKTIENGESELLSCHAFT, 80333 München (DE)
(72) Erfinder: Koch, Robert, 41542 Dormagen (DE); Kortemeyer, Alfred, 40721 Hilden (DE); Müller, Hubert, 47803 Krefeld (DE)

(56) Entgegenhaltungen:
- EP-A- 0 633 173
- DE-A- 19 641 254
- DE-T- 68 921 127
- DE-U- 1 855 446
- JP-A- 11 115 504
- US-A- 5 735 215
- 'Ein Zwitter namens Twino' STRASSENBAHN MAGAZIN 01 Februar 2001,

## Beschreibung

Die Erfindung betrifft ein angetriebenes Schienenfahrzeug für die Personenbeförderung im Nah- und Regionalverkehr gemäß dem Oberbegriff des Anspruchs 1. Ein solches Fahrzeug ist aus dem Artikel "Ein Zwitter namens Twino", Strassenbahnmagazin Nr 2/09, S. 18-23 bekannt.

Durch die DE 197 18 425 A1 ist eine für den Gütertransport konzipierte schienengebundene Transporteinheit bekannt, die zwei einer Lokomotive ähnliche Triebköpfe und zwischen diesen angeordnete Ladewagen zur Aufnahme von Wechselbehältern aufweist. Bei dem in Fig. 1 dieser Schrift gezeigten Triebkopf B ist die Antriebsanlage in Hybridbauweise ausgestaltet, d. h., neben einem Elektromotor ist eine Verbrennungskraftmaschine in Form eines Dieselmotors oder Benzinmotors vorgesehen, die einen Generator betreibt. Durch einen Umschalter ist es möglich, den Elektromotor entweder netzabhängig über einen Stromabnehmer oder netzunabhängig über den Generator zu speisen. Die Transporteinheit gemäß DE 197 18 425 A1 kann also auf elektrifizierten Strecken und auch auf nicht elektrifizierten Strecken eingesetzt werden.

Der EP 0 718 169 B1 ist ein ebenfalls für den Gütertransport bestimmter Schienenwagen mit eigenem Antriebsblock zu entnehmen. Der in einer containerartigen Rahmenstruktur integrierte und unter dem Wagenuntergestell gehaltene Antriebsblock umfasst beispielsweise einen Verbrennungsmotor als Antriebsaggregat, einen Kraftstofftank und außerdem noch für einen vollautomatischen Betrieb des Schienenwagens erforderliche Steuer- und Sicherungseinrichtungen. Bei diesem Schienenwagen handelt es sich jedoch nicht um ein Hybridfahrzeug.

Durch die EP 0 633 173 B1 gehört ferner ein mehrteiliger Triebwagen für die Personenbeförderung zum Stand der Technik, der elektrische Fahrmotoren aufweist. Diese Fahrmotoren können wahlweise durch einen Stromabnehmer über ein stationäres Leitungsnetz oder durch einen Generator mit Dieselmotor betrieben werden. Der Generator und der Dieselmotor sind auf einem Traggestell elastisch gelagert, das auf dem Dach eines Wagenteiles angeordnet ist.

Die DE-U-18 55 446 offenbart ein Elektro-Speicherfahrzeug, das insbesondere als Lokomotive ausgeführt ist. Dieses Fahrzeug hat einen ersten Einbauraum für einen ständig im Fahrzeug verbleibenden Akkumulator und einen zweiten Einbauraum für einen zusätzlichen Akkumulator oder eine so genannte Ladeanlage. Diese Ladeanlage umfasst entweder einen aus einer Fahrleitung gespeisten Transformator mit Gleichrichter oder einen dieselelektrischen Generator. Der zusätzliche Akkumulator bzw. die besagte Ladeanlage sind in gleichgroßen austauschbaren Behältern untergebracht, um ein schnelles Auswechseln zu ermöglichen. Im Hinblick auf die bei dem bekannten Lokomotiv-Fahrzeug ohne weiteres zur Verfügung stehenden großen Einbauräume bereitet die Unterbringung des jeweils austauschbaren Behälters keine Schwierigkeiten.

Der Erfindung liegt die Aufgabe zugrunde, bei einem Schienenfahrzeug der gattungsgemäßen Art die Antriebsbaugruppe als Zubehör-Modul bei Bedarf schnell und besonders gut zugänglich einbauen bzw. ausbauen zu können.

Diese Aufgabe wird erfindungsgemäß gelöst durch die Merkmale des Anspruchs 1.

Diese Lösung bietet vorteilhaft die Möglichkeit, beispielsweise Stadtbahnwagen, die je nach Wunsch der Verkehrsgesellschaften aus gleichartigen Modulen unterschiedlich zusammengesetzt werden und hauptsächlich auf elektrifizierten Strecken verkehren sollen, durch ein Zubehör-Modul "Antriebsbaugruppe" auch für einen zusätzlichen Betrieb auf nicht elektrifizierten Strecken einsetzen zu können. Dabei ist es sehr einfach möglich, die Antriebsbaugruppe nachträglich einzubauen, weil dazu eine vorhandene Öffnung der Fahrzeugaußenwand, in Form einer Türöffnung, genutzt werden kann. Der Wagenkasten ist stets identisch, so daß das grundsätzliche Prinzip der Baukasten-Bauweise beibehalten bleibt. Wegen des schnell und gut zugänglich möglichen Einbaues und Ausbaues der Antriebsbaugruppe kann auch eine Umrüstung z. B. für ein Anpassen an den jeweils aktuellen Stand der Motorentechnik (wie innovative Abgastechnik) leicht durchgeführt werden.

Vorteilhafte Ausgestaltungen der Erfindung sind in den Unteransprüchen angegeben.

Im weiteren wird die Erfindung anhand von Ausführungsbeispielen näher beschrieben, die in der Zeichnung prinzipartig dargestellt sind. Es zeigen
- Fig. 1: ein Schienenfahrzeug in Seitenansicht,
- Fig. 2: das Fahrzeug nach Fig. 1 in aufgeschnittener Ansicht von oben,
- Fig. 3: einen Teilbereich der Fig. 1 in vergrößerter Ansicht,
- Fig. 4: den Teilbereich nach Fig. 3 in der Draufsicht,
- Fig. 5: eine Alternative zu Fig. 3 (zweites Montageelement 5').

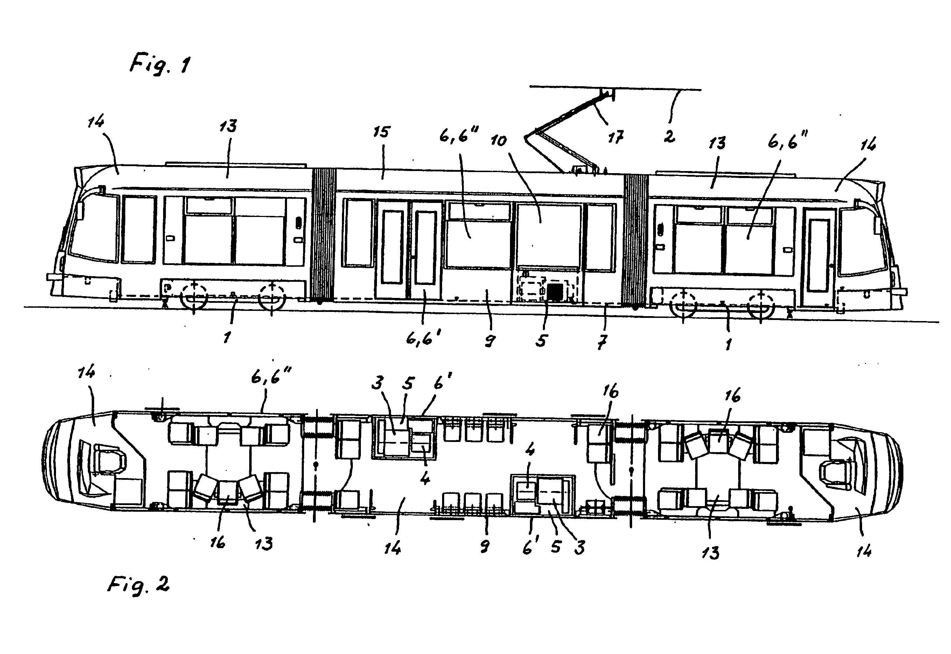

Das in Fig. 1 und 2 gezeigte Schienenfahrzeug ist ein dreiteiliger Straßenbahn- bzw. Stadtbahnwagen, der aus zwei Antriebsmodulen 13 mit jeweils einem Kopfmodul 14 und einem Mittelmodul 15 gebildet ist. Die Module 13 und 15 enthalten Fahrgastsitze 16. Die Antriebsmodule 13 weisen im Bereich ihrer Fahrwerke angeordnete elektrische Fahrmotoren 1 auf, die über einen Stromabnehmer 17 aus einem stationären Leitungsnetz 2 gespeist werden können. Die Außenwand 9 des Fahrzeuges ist mit Öffnungen 6 versehen, bei denen es sich insbesondere um Öffnungen 6' für Einstiegstüren und Öffnungen 6" für Fensterscheiben handelt.

Um das Fahrzeug auch auf nicht elektrifizierten Strecken durch die elektrischen Fahrmotoren 1 betreiben zu können, ist als Zubehör-Modul eine Antriebsbaugruppe vorgesehen, die ein behälterartig ausgebildetes und zumindest eine Verbrennungskraftmaschine 3 und einen Generator 4 aufnehmendes Montageelement 5 umfaßt. Als Verbrennungskraftmaschine 3 eignen sich ein Benzinmotor, ein Dieselmotor oder auch eine Brennstoffzelle.

Im Ausführungsbeispiel sind wegen einer höheren Antriebsleistung zwei der besagten Montageelemente 5 vorgesehen (siehe Fig. 2), die jeweils durch eine Türöffnung 6' in das Fahrzeug eingesetzt sind und auf dem Fahrzeugboden 7 stehen. Für einen einfachen und schnellen Einbau ist das Montageelement 5 mit Angriffsstellen für z. B. einen Hubwagen als Montagewerkzeug versehen. Dabei ist allen Fällen ein leicht zugänglicher Einbau bzw. Ausbau des Montageelements 5 von der Fahrzeugseite her gegeben. Das bei einer dachseitigen Anordnung der Antriebsbaugruppe bestehende Problem hinsichtlich der Einhaltung des Fahrzeug-Umgrenzungsprofils ist vermieden. Ebenso vermieden sind die im Falle einer Plazierung der Antriebsbaugruppe unterhalb des Fahrzeugbodens 7 auftretenden Schwierigkeiten hinsichtlich einer niederflurigen Fahrzeuggestaltung und der Zugänglichkeit.

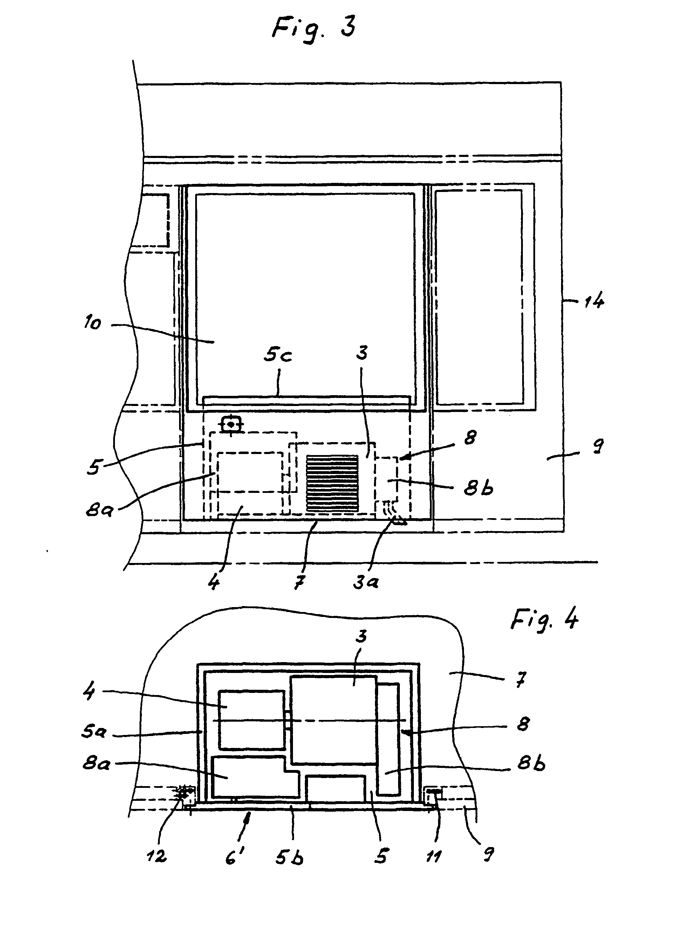

Das auf dem Fahrzeugboden 7 stehende Montageelement 5 weist einen flanschartigen Rahmen 5a auf, der am Fahrzeugboden 7 angeschraubt ist. Über einen solchen Rahmen 5a kann das Montageelement 5 auch mit seitlichen Trägern im Bereich der Türöffnung 6' lösbar verbunden werden. Die Verbrennungskraftmaschine 3 und der Generator 4 sind innerhalb des Montageelements 5 derart elastisch gelagert, daß Körperschall und Luftschall wirksam gedämpft werden. Wie insbesondere aus den Fig. 3 und 4 ersichtlich ist, enthält das Montageelement 5 weitere zur Antriebsbaugruppe gehörende Komponenten 8, wie einen Kraftstofftank 8a, eine Abgasanlage 8b und einen Kühler 8c. Eine Außenwand 5b des Montageelements 5 ist vorzugsweise mit einem Tankanschluß, einer Ansaugöffnung für Luft und einer Wartungsklappe versehen.

Das Montageelement 5 hat eine Breite, die der Breite der Türöffnung 6' entspricht. Die Außenwand 5b des Montageelements 5 schließt bündig mit der Fahrzeugaußenwand 9 ab, wobei die oberhalb des Montageelements 5 befindliche restliche Türöffnung 6' durch ein Seitenwandfeld 10 aus bevorzugt Glas verschlossen ist. Die Oberseite 5c des Montageelements 5 bildet vorteilhaft eine Ablagefläche für beispielsweise Koffer und Taschen.

Aus dem Montageelement 5 herausgeführte Stromleitungen für 750 V und 24 V sind mit jeweils einer fahrzeugseitig angeordneten Klemmstelle 11 bzw. mit einem Steckverbinder verbunden. Die Klemmstelle 11 und der Steckverbinder 12 sind jeweils seitlich neben dem Montageelement 5 angeordnet. Ein Abgasrohr 3a der Verbrennungskraftmaschine 3 ist abgedichtet nach unten durch den Fahrzeugboden 7 geführt. Vorteilhaft kann auch ein unterhalb der Türöffnung 6' befindlicher freier Einbauraum für eine verschiebbare Einstiegshilfe (wie Trittstufe oder Rampe) für die Integration des Montageelements 5 genutzt werden, wobei die Einstiegshilfe bei im Fahrzeug angeordnetem Montageelement 5 nicht eingebaut ist.

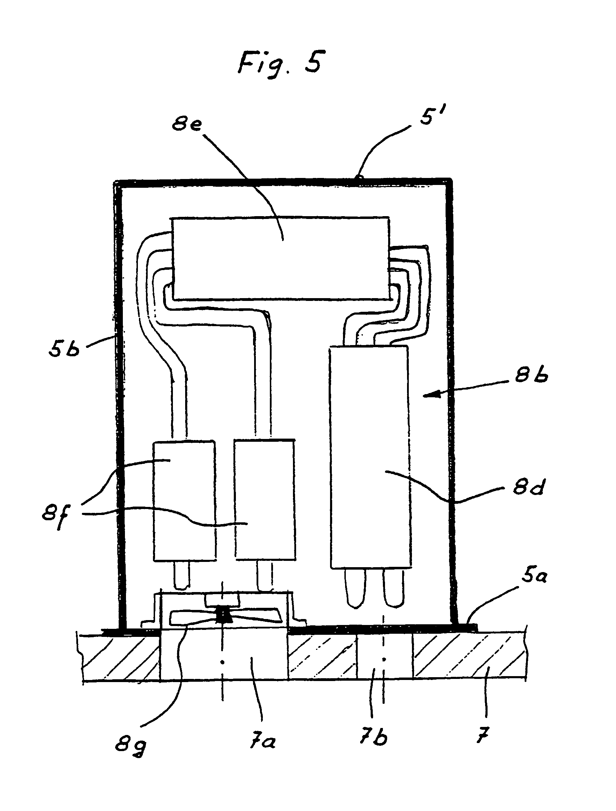

Als Alternative zu dem bisher beschriebenen Montageelement 5, das gemäß Fig. 3 und 4 auch eine Abgasanlage 8b und ein Abgasrohr 3a aufweist, besteht die in Fig. 5 gezeigte Möglichkeit, die Abgasanlage 8b in einem zweiten behälterförmigen Montageelement 5' (Abgasmodul) anzuordnen. Dieses zweite, gegenüber Schall und Wärme isolierte Montageelement 5' kann ebenfalls durch eine vorhandene Öffnung 6 der Fahrzeugaußenwand 9 in das Fahrzeug eingesetzt und über einen flanschartigen Rahmen 5a am Fahrzeugboden 7 angeschraubt werden.

Die im zweiten Montageelement 5' enthaltene Abgasanlage 8b umfaßt einen Vorschalldämpfer 8d, einen Hauptschalldämpfer 8e und zumindest einen Nachschalldämpfer 8f. Außerdem hat die Abgasanlage 8b einen Fortlüfter 8g, der im Bereich einer Abgasöffnung 7a des Fahrzeugbodens 7 plaziert ist. Durch den Einsatz des Fortlüfters 8g gelangt das Abgas in verwirbeltem Zustand aus dem zweiten Montageelement 5' in die äußere Umgebung und bildet somit dort keine Rauchwolke. Eine weitere Öffnung 7b im Fahrzeugboden dient dem Einströmen von Zuluft in das zweite Montageelement 5'.

### Liste der Bezugszeichen

- 1: elektrischer Fahrmotor
- 2: stationäres Leitungsnetz
- 3: Verbrennungkraftmaschine
- 3a: Abgasrohr
- 4: Generator
- 5: Montageelement
- 5': zweites Montageelement (Abgasmodul)
- 5a: flanschartiger Rahmen
- 5b: Außenwand
- 5c: Oberseite
- 6: Öffnung der Fahrzeugaußenwand
- 6': Türöffnung
- 6": Fensteröffnung
- 7: Fahrzeugboden
- 7a: Öffnung für Abgas
- 7b: Öffnung für Zuluft
- 8: Komponente der Antriebsbaugruppe
- 8a: Kraftstofftank
- 8b: Abgasanlage
- 8c: Kühler
- 8d: Vorschalldämpfer
- 8e: Hauptschalldämpfer
- 8f: Nachschalldämpfer
- 8g: Fortlüfter
- 9: Fahrzeugaußenwand
- 10: Seitenwandfeld11
- 11: Klemmstelle (750 V)
- 12: Steckverbinder (24 V)
- 13: Antriebsmodul
- 14: Kopfmodul
- 15: Mittelmodul
- 16: Fahrgastsitz
- 17: Stromabnehmer

## Patentansprüche

1. Angetriebenes Schienenfahrzeug für die Personenbeförderung im Nah- und Regionalverkehr, mit wenigstens einem elektrischen Fahrmotor (1), der über ein stationäres Leitungsnetz (2) oder durch einen mit einer Verbrennungskraftmaschine (3) gekoppelten Generator (4) gespeist wird, wobei die Verbrennungskraftmaschine (3) und der Generator (4) durch ein fahrzeugseitig anschließbares Montageelement (5) zu einer Antriebsbaugruppe vereinigt sind, wobei die Außenwand (9) des Fahrzeuges mit Öffnungen (6) versehen ist, bei denen es sich um Öffnungen (6') für Einstiegstüren und Öffnungen (6") für Fensterscheiben handelt, **dadurch gekennzeichnet, dass** das Montageelement (5) als Behälter mit solchen Abmessungen ausgebildet ist, dass dieses Montageelement (5) durch eine der in der Fahrzeugaußenwand (9) vorhandenen Türöffnungen (6') in das Fahrzeug einsetzbar ist, dass das Montageelement (5) eine der Breite der Türöffnung (6') entsprechende Breite und eine Außenwand (5b) aufweist, die bündig mit der Fahrzeugaußenwand (9) abschließt, dass die oberhalb des Montageelementes (5) liegende restliche Türöffnung (6') durch ein Seitenwandfeld (10) geschlossen ist und dass das Montageelement (5) im Fahrgastraum angeordnet ist und auf dem Fahrzeugboden (7) steht.

2. Angetriebenes Schienenfahrzeug nach Anspruch 1, **dadurch gekennzeichnet, dass** das Seitenwandfeld (10) aus Glas besteht.

3. Angetriebenes Schienenfahrzeug nach einem der Ansprüche 1 oder 2, **dadurch gekennzeichnet, dass** das Montageelement (5) einen flanschartigen Rahmen (5a) aufweist, der am Fahrzeugboden (7) und/oder an seitlichen Trägern im Bereich der Türöffnung (6') anschraubbar ist.

4. Angetriebenes Schienenfahrzeug nach einem der Ansprüche 1 bis 3, **dadurch gekennzeichnet, dass** das Montageelement (5) für einen raschen Einbau bzw. Ausbau mit Angriffsstellen für ein Montagewerkzeug, z. B. einen Hubwagen, versehen ist.

5. Angetriebenes Schienenfahrzeug nach einem der Ansprüche 1 bis 4, **dadurch gekennzeichnet, dass** die Oberseite (5c) des Montageelements (5) eine Ablagefläche für beispielsweise Koffer und Taschen bildet.

6. Angetriebenes Schienenfahrzeug nach einem der Ansprüche 1 bis 5, **dadurch gekennzeichnet, dass** das Montageelement (5) weitere zur Antriebsbaugruppe gehörende Komponenten (8) enthält, insbesondere einen Kraftstofftank (8a), eine Abgasanlage (8b) und/oder einen Kühler (8c).

7. Angetriebenes Schienenfahrzeug nach einem der Ansprüche 1 bis 6, **dadurch gekennzeichnet, dass** die Verbrennungskraftmaschine (3) und/oder der Generator (4) innerhalb des Montageelements (5) im Sinne einer Körperschalldämpfung und einer Luftschalldämpfung elastisch gelagert sind.

8. Angetriebenes Schienenfahrzeug nach einem der Ansprüche 1 bis 7, **dadurch gekennzeichnet, dass** die Außenwand (5b) des Montageelementes (5) mit einem Tankanschluss, einer Ansaugöffnung für Luft und/oder einer Wartungsklappe versehen ist.

9. Angetriebenes Schienenfahrzeug nach einem der Ansprüche 1 bis 8, **dadurch gekennzeichnet, dass** aus dem Montageelement (5) herausgeführte Stromleitungen (750 V und 24 V) mit jeweils einer fahrzeugseitig angeordneten Klemmstelle (11) bzw. einem Steckerverbinder (12) zu verbinden sind.

10. Angetriebenes Schienenfahrzeug nach Anspruch 9, **dadurch gekennzeichnet, dass** die Klemmstelle (11) bzw. der Steckerverbinder (12) jeweils seitlich neben dem Montageelement (5) angeordnet sind.

11. Angetriebenes Schienenfahrzeug nach einem der Ansprüche 1 bis 10, **dadurch gekennzeichnet, dass** ein Abgasrohr (3a) der Verbrennungskraftmaschine (3) abgedichtet nach unten durch den Fahrzeugboden (-7) geführt ist.

12. Angetriebenes Schienenfahrzeug nach einem der Ansprüche 1 bis 11, **dadurch gekennzeichnet, dass** ein unterhalb der Türöffnung (6') befindlicher freier Einbauraum für eine verschiebbare Einstiegshilfe (wie Trittstufe oder Rampe) für die Integration des Montageelements (5) genutzt wird, wobei die Einstiegshilfe bei im Fahrzeug angeordnetem Montageelement (5) nicht eingebaut ist.

13. Angetriebenes Schienenfahrzeug nach einem der Ansprüche 1 bis 12, **dadurch gekennzeichnet, dass** ein zweites behälterartig ausgebildetes Montageelement (5') vorgesehen ist (Abgasmodul), das die Abgasanlage (8b) aufnimmt.

14. Angetriebenes Schienenfahrzeug nach Anspruch 13, **dadurch gekennzeichnet, dass** dem zweiten Montageelement (5') ein Fortlüfter (8g) zugeordnet ist, der sich im Bereich einer Abgasöffnung (7a) des Fahrzeugbodens (7) befindet und das Abgas aus dem zweiten Montageelement (5') in verwirbeltem Zustand in die Umgebung fördert.

15. Angetriebenes Schienenfahrzeug nach Anspruch 13 oder 14, **dadurch gekennzeichnet, dass** der Fahrzeugboden (7) eine weitere Öffnung (7b) für das Einströmen von Zuluft in das zweite Montageelement (5') aufweist.

16. Angetriebenes Schienenfahrzeug nach einem der Ansprüche 13 bis 15, **dadurch gekennzeichnet, dass** das zweite behälterartig ausgebildete Montageelement (5') gegenüber Schall und Wärme isoliert ist.

## Claims

1. Driven rail vehicle for passenger transport in local and regional transport services, having at least one electric traction motor (1), which is powered via a stationary line network (2) or by a generator (4) coupled with an internal combustion engine (3), wherein the internal combustion engine (3) and the generator (4) are amalgamated into a drive assembly by an assembly element (5) connectable on the vehicle side, and wherein the outer wall (9) of the vehicle is provided with openings (6), constituted by openings (6') for entrance doors and openings (6") for window panes, **characterized in that** the assembly element (5) is configured as a container with such dimensions that this assembly element (5) can be inserted into the vehicle through one of the door openings (6) present in the vehicle outer wall (9), **in that** the assembly element (5) has a width which corresponds to the width of the door opening (6') and an outer wall (5b) which terminates flush with the vehicle outer wall (9), **in that** the rest of the door opening (6') situated above the assembly element (5) is closed off by a side wall panel (10) and **in that** the assembly element (5) is disposed in the passenger compartment and stands on the vehicle floor (7).

2. Driven rail vehicle according to Claim 1, **characterized in that** the side wall panel (10) consists of glass.

3. Driven rail vehicle according to either of Claims 1 and 2, **characterized in that** the assembly element (5) has a flange-like frame (5a), which can be bolted to the vehicle floor (7) and/or to lateral beams in the region of the door opening (6').

4. Driven rail vehicle according to one of Claims 1 to 3, **characterized in that**, for a rapid installation and removal, the assembly element (5) is provided with points of application for an assembly tool, for example a lift truck.

5. Driven rail vehicle according to one of Claims 1 to 4, **characterized in that** the top side (5c) of the assembly element (5) forms a storage shelf for, for example, cases and bags.

6. Driven rail vehicle according to one of Claims 1 to 5, **characterized in that** the assembly element (5) contains further components (8) belonging to the drive assembly, in particular a fuel tank (8a), an exhaust system (8b) and/or a radiator (8c).

7. Driven rail vehicle according to one of Claims 1 to 6, **characterized in that** the internal combustion engine (3) and/or the generator (4) are mounted elastically within the assembly element (5) with a view to damping the structure-borne sound and airborne sound.

8. Driven rail vehicle according to one of Claims 1 to 7, **characterized in that** the outer wall (5b) of the assembly element (5) is provided with a tank connection, a suction port for air and/or a service flap.

9. Driven rail vehicle according to one of Claims 1 to 8, **characterized in that** power lines (750 V and 24 V) run out from the assembly element (5) are to be connected to, respectively, a terminal (11) disposed on the vehicle side and to a connector (12).

10. Driven rail vehicle according to Claim 9, **characterized in that** the terminal (11) and the connector (12) are disposed respectively alongside the assembly element (5).

11. Driven rail vehicle according to one of Claims 1 to 10, **characterized in that** an exhaust pipe (3a) of the internal combustion engine (3) is led downwards through the vehicle floor (7) in sealed arrangement.

12. Driven rail vehicle according to one of Claims 1 to 11, **characterized in that** a free installation space, located beneath the door opening (6'), for a displaceable boarding aid (such as step or ramp) is used for the integration of the assembly element (5), the boarding aid not being installed if the assembly element (5) is disposed in the vehicle.

13. Driven rail vehicle according to one of Claims 1 to 12, **characterized in that** a second container-like assembly element (5') is provided (exhaust module), which receives the exhaust system (8b).

14. Driven rail vehicle according to Claim 13, **characterized in that** to the second assembly element (5') there is assigned an air-extractor fan (8g), which is located in the region of an exhaust opening (7a) in the vehicle floor (7) and conveys the exhaust gas out of the second assembly element (5') in the swirled state into the environment.

15. Driven rail vehicle according to Claim 13 or 14, **characterized in that** the vehicle floor (7) has a further opening (7b) for the influx of inlet air into the second assembly element (5').

16. Driven rail vehicle according to one of Claims 13 to 15, **characterized in that** the second container-like assembly element (5') is insulated against sound and heat.

## Revendications

1. Véhicule sur rails à propulsion autonome pour le transport de passagers dans le trafic urbain et régional, comportant au moins un moteur (1) de traction électrique qui est alimenté au moyen d'un réseau (2) électrique fixe ou par une génératrice (4) couplée à un moteur (3) à combustion interne, le moteur (3) à combustion interne et la génératrice (4) étant réunis en un ensemble d'entraînement par un élément (5) de montage pouvant être raccordé sur le véhicule, la paroi (9) extérieure du véhicule étant pourvue d'ouvertures (6) qui sont des ouvertures (6') pour des portes d'accès et des ouvertures (6") pour des vitres de fenêtres, **caractérisé en ce que** l'élément (5) de montage est réalisé sous forme de contenant de dimensions telles que cet élément (5) de montage peut être introduit dans le véhicule par l'une des ouvertures (6) présentes dans la paroi (9) extérieure du véhicule, **en ce que** l'élément de montage a une largeur correspondant à la largeur de l'ouverture (6') de la porte et a une paroi (5b) extérieure, qui est à affleurement avec la paroi (9) extérieure du véhicule, **en ce que** l'ouverture (6') de porte restante au dessus de l'élément (5) de montage est fermée par un panneau (10) de paroi latérale et **en ce que** l'élément (5) de montage est disposé dans le compartiment des passagers et s'élève du plancher (7) du véhicule.

2. Véhicule sur rails à propulsion autonome suivant la revendication 1, **caractérisé en ce que** le panneau (10) de paroi latérale est réalisé en verre.

3. Véhicule sur rails à propulsion autonome suivant l'une des revendications 1 ou 2, **caractérisé en ce que** l'élément (5) de montage comprend un bâti (5a) du genre semelle, qui peut être boulonné sur le plancher (7) du véhicule et/ou à des éléments porteurs latéraux dans la région de l'ouverture (6') de porte.

4. Véhicule sur rails à propulsion autonome suivant l'une des revendications 1 à 3, **caractérisé en ce que** l'élément (5) de montage est pourvu, pour un montage ou démontage rapide, de points d'attaque pour un outil de montage, par exemple un chariot élévateur.

5. Véhicule sur rails à propulsion autonome suivant l'une des revendications 1 à 4, **caractérisé en ce que** le dessus (5c) de l'élément (5) de montage forme une surface de rangement pour, par exemple, des valises et des sacs.

6. Véhicule sur rails à propulsion autonome suivant l'une des revendications 1 à 5, **caractérisé en ce que** l'élément (5) de montage contient d'autres éléments (8) faisant partie de l'ensemble d'entraînement, en particulier un réservoir (8a) de carburant, un système (8b) d'échappement et/ou un dissipateur (8c) de chaleur.

7. Véhicule sur rails à propulsion autonome suivant l'une des revendications 1 à 6, **caractérisé en ce que** le moteur (3) à combustion interne et/ou la génératrice (4) sont montés élastiquement à l'intérieur de l'élément (5) de montage en vue d'un amortissement du bruit structurel et d'un amortissement du bruit aérien.

8. Véhicule sur rails à propulsion autonome suivant l'une des revendications 1 à 7, **caractérisé en ce que** la paroi (5b) extérieure de l'élément (5) de montage est pourvue d'un branchement de réservoir, d'une ouverture d'aspiration d'air et/ou d'un volet de maintenance.

9. Véhicule sur rails à propulsion autonome suivant l'une des revendications 1 à 8, **caractérisé en ce que** des lignes électriques (750 V et 24 V) sortant de l'élément (5) de montage doivent être respectivement reliées à un bornier (11) et un connecteur (12) enfichable disposés sur le véhicule.

10. Véhicule sur rails à propulsion autonome suivant la revendication 9, **caractérisé en ce que** le bornier (11) et le connecteur (12) enfichable sont respectivement disposés sur les côtés de l'élément (5) de montage.

11. Véhicule sur rails à propulsion autonome suivant l'une des revendications 1 à 10, **caractérisé en ce qu'**un tuyau (3a) d'échappement du moteur (3) à combustion interne passe avec étanchéité vers le bas à travers le plancher (7) du véhicule.

12. Véhicule sur rails à propulsion autonome suivant l'une des revendications 1 à 11, **caractérisé en ce qu'**un espace libre d'installation pour une aide mobile d'accès (marchepied ou rampe par exemple), espace qui se trouve en dessous de l'ouverture (6') de porte, est utilisé pour l'intégration de l'élément (5) de montage, l'aide d'accès n'étant pas installée lorsque l'élément (5) de montage est disposé dans le véhicule.

13. Véhicule sur rails à propulsion autonome suivant l'une des revendications 1 à 12, **caractérisé en ce qu'**il est prévu un deuxième élément (5') de montage conçu du genre contenant (module d'échappement), qui reçoit le système (8b) d'échappement.

14. Véhicule sur rails à propulsion autonome suivant la revendication 13, **caractérisé en ce qu'**une soufflante (8g) de refoulement, qui se trouve dans la région d'une ouverture (7a) de gaz d'échappement du plancher (7) du véhicule, est associée au deuxième élément (5') de montage et refoule en tourbillonnement les gaz d'échappement du deuxième élément (5') de montage dans l'environnement.

15. Véhicule sur rails à propulsion autonome suivant la revendication 13 ou 14, **caractérisé en ce que** le plancher (7) du véhicule comporte une autre ouverture (7b) pour l'afflux d'air d'alimentation dans le deuxième élément (5') de montage.

16. Véhicule sur rails à propulsion autonome suivant l'une des revendications 13 à 15, **caractérisé en ce que** le deuxième élément (5') de montage conçu du genre contenant est isolé du point de vue acoustique et thermique.
